# EUROPEAN PATENT SPECIFICATION

(11) **EP 1 262 398 B1**
(45) Date of publication and mention of the grant of the patent: **27.07.2005**
(21) Application number: 02077031.9
(22) Date of filing: 24.05.2002
(51) Int. Cl.: B62D 55/125

(54) **Drive Wheels**
Angetriebene Räder
Roues motrices

(30) Priority: 30.05.2001 GB 0113127
(43) Date of publication of application: 04.12.2002
(73) Proprietor: Heard, Stephen John, Billesdon, Leicestershire LE7 9EJ (GB)
(72) Inventor: Heard, Stephen John, Billesdon, Leicestershire LE7 9EJ (GB)
(74) Representative: SERJEANTS

(56) References cited:
- DE-A- 19 920 025
- US-A- 3 948 110
- US-A- 5 842 757

## Description

### Technical Field

The present invention relates to drive wheels, and in particular to drive wheels for use in a positive drive track system.

### Background Art

It is known to replace the standard wheels of an agricultural vehicle with a positive drive track system. An example of a positive drive track system is disclosed in the present Applicant's British Patent Application No. 0004469.3.

The track is normally made of a rubber material and has a number of chevron-shaped cleats on its outer surface. The inner surface of the track is formed with a number of integral drive lugs. The part of the track that contacts the ground is supported by a pair of bogie wheels and end idlers which share the weight of the vehicle. A drive wheel is fastened to the driven axle of the agricultural vehicle. The drive wheel has a plurality of paddles or drive bars which engage between the drive lugs on the inner surface of the track to positively drive the track. The drive wheel is sandwiched between a pair of carriage plates that support the axles for the bogie wheels and end idlers. The carriage plates also accommodate a hydraulic slide or pivot which is used to tension the track.

Conventional positive drive track systems have always relied on the drive bars as described in US-A-3 948 110 or separate additional support wheels to share the load. This can lead to excessive wear on the track and the use of additional support wheels means that the track system is complicated to install and maintain.

It is important to the operation of a positive drive track system that the end idlers are mounted a predetermined axial distance apart so that they can guide the track. This is not always possible in conventional positive drive track systems. Two conventional positive drive track systems are known. The first uses a drive wheel consisting of a pair of parallel drive plates that are linked around the edge by a plurality of drive bars. It will be readily appreciated that for this drive wheel to drive the track it is necessary for the parallel drive plates to be separated by a distance that is wider than the drive lugs on the track. The second uses paddle-shaped drive bars that are significantly wider then the drive lugs. In both cases the width of the drive bars can prevent the end idlers from being mounted on the carriage plates with the correct axial separation.

The purpose of the present invention is to provide full support of the track without the need for additional support wheels. A further purpose is to allow the optional use of narrower drive bars that can be accommodated within a variety of carriage plate designs.

### Summary of the Invention

The present invention provides a drive wheel for driving a track having a plurality of drive lugs on its inner surface, the drive wheel comprising a plurality of drive bars for engaging between the drive lugs to drive the track and a support plate between each adjacent pair of drive bars for contacting a radially inner surface of the drive lugs, wherein the support plate extends in the axial direction on both sides of the drive wheel, and wherein the drive bars and the support plate have a narrower width than the drive lugs of the track.

The radially outer portions of the drive lugs are preferably cylindrical.

The present invention further provides a positive drive track system incorporated the above drive wheel.

### Drawings

Figure 1 is a side view showing a track and a drive wheel in accordance with the present invention;
Figure 2 is a detail view showing the relationship between the drive lugs, the drive bars and the support plates;
Figure 3 is a cross sectional view showing the relative widths of the drive lug, drive bar and support plate taken along line AA of Figure 2;
Figure 4 is a cross sectional view showing the mounting detail of the drive wheel of Figure 1.

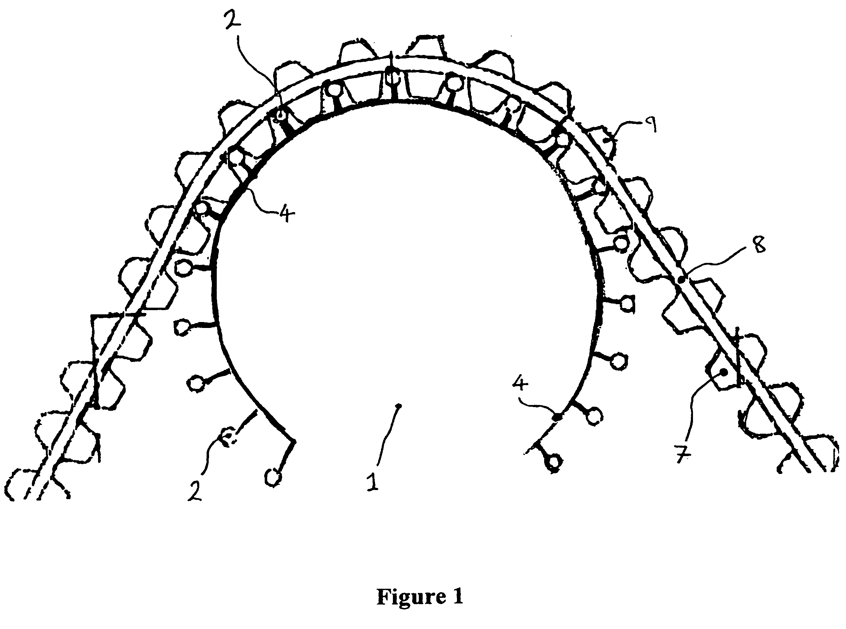

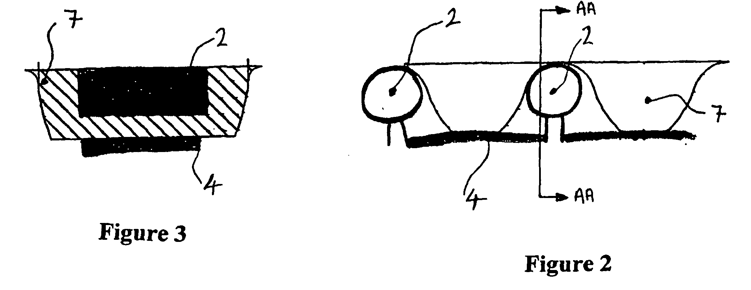

As shown in Figures 1 to 4, the rubber track 8 of a positive drive track system has a number of cleats 9 on its outer surface and a number of drive lugs 7 on its inner surface. A drive wheel 1 has a number of paddles or drive bars 2 evenly spaced around its circumference. The drive bars 2 have cylindrical ends and intermesh with the drive lugs 7 as shown in Figures 1 and 2 to drive the belt as the drive wheel 1 is rotated. A separate support plate 4 is positioned between each adjacent pair of drive bars 2 and is designed to contact the radially inner surface of the drive lugs 7 to provide additional support. The use of supporting plates 4 means that the track tension and torque loading is no longer taken wholly on the drive bars 2 and allows the width of the drive bars to be reduced. Sharing the load between the drive bars 2 and the support plates 4 also reduces the pressure on the track 8 and helps to eliminate wear.

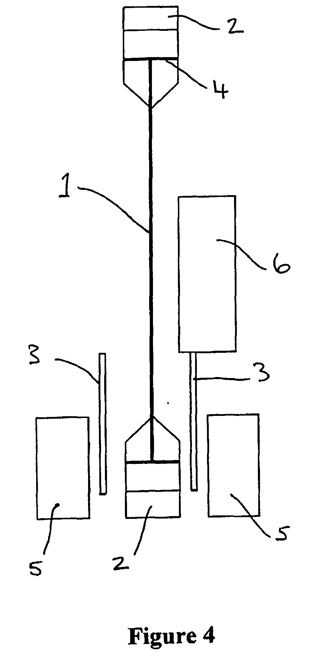

With reference to Figure 4, the drive wheel 1 is fastened to the driven axle of an agricultural vehicle (not shown) by means of a bearing housing 6. The drive wheel 1 is sandwiched between a pair of carriage plates 3 that supports a pair of end idlers 5 by means of an axle (not shown). Because the drive bars 2 are narrower than the drive lugs it means that the carriage plates 3 can be separated by a smaller distance. This enables the end idlers 5 to be mounted with the correct axial separation so that they guide the track properly.

## Claims

1. A drive wheel (1) for driving a track (8) having a plurality of drive lugs (7) on its inner surface, the drive wheel (1) comprising a plurality of drive bars (2) for engaging between the drive lugs (7) to drive the track and a support plate (4) between each adjacent pair of drive bars (2) for contacting a radially inner surface of the drive lugs (7), wherein the support plate (4) extends in the axial direction on both sides of the drive wheel (1), and wherein the drive bars (2) and the support plate (4) have a narrower width than the drive lugs (7) of the track (8).

2. A drive wheel (1) according to claim 1, wherein the radially outer portions of the drive bars (2) are cylindrical.

3. A positive drive track system incorporating a drive wheel (1) according to claim 1 or claim 2.

## Patentansprüche

1. Antriebsrad (1) zum Antreiben einer Kette (8) mit mehreren Antriebs-Mitnehmern (7) an ihrer inneren Fläche, wobei das Antriebsrad (1) mehrere Antriebsstangen (2) aufweist, um zwischen den Antriebs-Mitnehmern (7) in Eingriff zu kommen, so dass die Kette angetrieben wird, und eine Stützplatte (4) zwischen jedem benachbarten Paar von Antriebsstangen (2), um mit einer radial inneren Fläche der Antriebs-Mitnehmer (7) in Kontakt zu kommen, wobei sich die Stützplatte (4) in der axialen Richtung an beiden Seiten des Antriebsrads (1) erstreckt und wobei die Antriebsstangen (2) und die Stützplatte (4) eine schmalere Breite haben als die Antriebs-Mitnehmer (7) der Kette (8).

2. Antriebsrad (1) nach Anspruch 1, wobei die radial äußeren Teile der Antriebsstangen (2) zylindrisch sind.

3. Direktantriebs-Kettensystem das ein Antriebsrad (1) nach Anspruch 1 oder Anspruch 2 aufnimmt.

## Revendications

1. Roue d'entraînement (1) pour entraîner une chenille (8) comportant une pluralité de pattes d'entraînement (7) sur sa surface intérieure, la roue d'entraînement (1) comprenant une pluralité de barres d'entraînement (2) destinées à venir en prise entre les pattes d'entraînement (7) de façon à entraîner la chenille et une plaque de support (4) entre chaque paire adjacente de barres d'entraînement (2) pour venir en contact avec une surface radialement intérieure des pattes d'entraînement (7), la plaque de support (4) s'étendant dans la direction axiale des deux côtés de la roue d'entraînement (1), et les barres d'entraînement (2) et la plaque de support (4) ayant une largeur plus faible que celle des pattes d'entraînement (7) de la chenille (8).

2. Roue d'entraînement (1) selon la revendication 1, dans laquelle les parties radialement extérieures des barres d'entraînement (2) sont cylindriques.

3. Système de chenille à entraînement actif incorporant une roue d'entraînement (1) selon la revendication 1 ou la revendication 2.
